# EUROPEAN PATENT APPLICATION

(11) **EP 4 418 509 A1**
(43) Date of publication of application: **21.08.2024**
(21) Application number: 23202253.3
(22) Date of filing: 06.10.2023
(51) Int. Cl.: H02K 33/00, H02K 49/10, H02K 41/03

(54) **CONSTANT FORCE GENERATOR AND APPARATUS INCLUDING IT**

(30) Priority: 17.02.2023 JP 2023023092
(71) Applicant: Nippon Pulse Motor Co., Ltd., Bunkyo-ku Tokyo 113-0033 (JP)
(72) Inventor: SAYAMA, Koji, Tokyo 113-0033 (JP)
(74) Representative: Prüfer & Partner mbB Patentanwälte · Rechtsanwälte

(57) **Abstract**

A constant force generator includes a case of a tube-shaped ferromagnetic material and extending in an axial direction, a tube-shaped stator disposed in the case, and a rod-shaped shaft disposed in the tube-shaped stator via a gap. The tube-shaped stator includes N main permanent magnets magnetized in a radial direction and disposed adjacently at regular angular intervals of (360/N) degrees, and an even number of secondary permanent magnets magnetized in a circumferential direction and sandwiching each of the N main permanent magnets on both sides in the circumferential direction. The secondary permanent magnets sandwich the both sides of each main permanent magnet so that magnetic poles of the secondary permanent magnets, facing the both sides of the sandwiched main permanent magnet, have a polarity the same as an inside magnetic pole of the sandwiched main permanent magnet. The rod-shaped shaft at least includes a shaft portion of a magnetic material.

## Description

### BACKGROUND OF THE INVENTION:

### [Field of the Invention]

The present invention relates to a constant force generator and, more particularly, to a constant force generator used as a thrust force assist mechanism for assisting a thrust force against a gravity load for a linear motor used by driving a driven body in a vertical direction.

### [Description of Related Art]

In some cases, a linear motor may be used for driving a driven body in a vertical direction. For instance, in a dispensing device for sucking and discharging a small amount of liquid, the linear motor is used for moving a dispensing head as the driven body up and down (in the vertical direction).

Such a linear motor includes, for example, a motor shaft having a central axis extending in the vertical direction and a field coil disposed around the motor shaft. The motor shaft is formed by connecting a plurality of permanent magnets, each of which is magnetized in a direction of the central axis, in series with the same magnetic poles faced to each other and by fixing the plurality of permanent magnets. The field coil is formed by connecting a plurality of tube-shaped coils in series so as to concentrically enclose the motor shaft via a gap. Such a linear motor is, for example, configured so that the motor shaft acts as a movable portion and that the field coil acts as the fixed portion. The linear motor having such a configuration is called a fixed coil type of linear motor or a moving magnet type of linear motor (hereinafter called a fixed coil linear motor or a moving magnet linear motor, respectively).

On the other hand, different from the above-mentioned fixed coil (moving magnet) linear motor, a linear motor, which is configured so that the motor shaft acts as a fixed portion and that the field coil acts as a movable portion, is also known. The linear motor having such a configuration is called a fixed magnet linear motor or a moving coil linear motor.

In the above-mentioned fixed coil (moving magnet) linear motor, the field coil is composed of at least three coils of a U phase, a V phase, and a W phase in order to constitute a three-phase motor as the linear motor. The three-phase motor controls electric currents for the respective coils by flowing AC currents having electrically phase differences of 120 degrees to the respective coils. By controlling the electric currents in such a manner, the three-phase motor is configured so that a thrust force for driving the motor shaft in the direction of the central axis (vertical direction) is obtained by an action (so-called Fleming's left-hand rule) of a magnetic field generated by the permanent magnets and the electric currents flowing through the coils.

In the fixed coil (moving magnet) linear motor having such a configuration, an electromagnetic force does not act between the coils and the permanent magnets in a case where the electric currents do not flow through the field coil. Accordingly, the motor shaft of the linear motor falls downward with the driven body due to the gravity load applied thereto. For instance, in a case where a power source for flowing the electric currents through the coils is suddenly shut down, the driven body including the motor shaft falls down sharply. The fallen driven body may collide against mechanical equipment and materials which are disposed under the linear motor, and then the mechanical equipment and materials might be damaged.

As described above, the linear motors are broadly classified into two types. Whether the fixed coil (moving magnet) linear motor or the fixed magnet (moving coil) linear motor includes the permanent magnets arranged in series with the north pole and the south pole alternately arranged, and operates by attraction and repulsion with the magnetic field of the field coil. Accordingly, also in the fixed magnet (moving coil) linear motor, the driven body may fall down sharply if the electric currents do not flow through the field coil.

In order to prevent falling of the driven body as mentioned above, an apparatus using the linear motor is provided with a thrust force assist mechanism for assisting the thrust force against the gravity load for the driven body. As the thrust force assist mechanism for preventing the falling, a compression/extension spring, an air compressor, and a counterweight or a counterbalance have been used.

Such a thrust force assist mechanism is used not only for preventing the falling of the driven body but also for assisting a constant thrust force against the gravity load while driving the linear motor. Specially, in the above-mentioned dispensing device which needs precise position control, a servo-controlled linear motor, that is, a linear servomotor is often used as the linear motor. In a case of servo-controlling the linear servomotor, a work known as gain adjustment is necessitated. In a case where a load is constant, it is possible to easily carry out the gain adjustment. However, in a case where the load changes, it is difficult to carry out the gain adjustment. It is known in the art that, even if the gain adjustment is carried out, the linear servomotor does not easily perform an optimum motion. Accordingly, the thrust force assist mechanism for assisting the constant thrust force has a merit in the apparatus using such a linear servomotor.

However, such known thrust force assist mechanisms are disadvantageous as described hereunder, respectively.

Specifically, the compression/extension spring has a stronger restoring force in proportion to an amount of flexure and then has no constant force. Since the compression/extension spring causes plastic deformation, the compression/extension spring has a spring constant which changes due to a high load, a long-time load, and so on. The longer the compression/extension spring becomes, the smaller the spring constant becomes. Therefore, a change in force against the amount of flexure becomes small. Accordingly, in order to decrease the change in force against the amount of flexure, a sufficiently long spring in a longitudinal direction must be used. In a case where the linear motor for driving a long stroke should be assisted by the compression/extension spring, a considerably long compression/extension spring in the longitudinal direction must be used in order to decrease the change in force against the amount of flexure.

Similar to the compression/extension spring, the air compressor has a stronger force in proportion to compressibility of a piston. In the air compressor, air leakage occurs and the force changes over the years.

The counterbalance structurally requires a fair amount of space. The counterbalance suffers deterioration of a wire and so on.

In view of the above, it is desired to provide a constant force generator which has no disadvantages described above and which can keep a constant thrust force at any position in a stroke of the linear motor.

US 2004/0004405 A1 (which will hereinafter be called "Patent Document 1") discloses a "constant force generator" which comprises a fixedly arranged part and a part arranged to be movable in an axial direction relative to this fixedly arranged part. At least one of the two parts comprises a magnetically conductive region or a permanent magnetic region. At least the other part comprises a permanent magnetic region, whose magnetization is such that at least a portion of the magnetic flux produced emerges from the permanent magnetic region at right angles to the axial direction of movement of the movably arranged part, enters the magnetically conductive region, is guided therein, emerges from the magnetically conductive region and runs back to the permanent magnetic region. Patent Document 1 discloses, as an example embodiment, a case made of a hollow cylindrical ferromagnetic material.

The constant force generator disclosed in the above-mentioned Patent Document 1 introduces problems which will presently be described.

The constant force generator disclosed in Patent Document 1 introduces a problem that the magnetic flux generated from the permanent magnetic region leaks much from the above-mentioned case to an outside. In a case of a large amount of a leakage flux, on mounting the constant force generator to the above-mentioned apparatus, a force for pulling the constant force generator towards other parts made of a magnetic material is exerted. In consequence, assembling the apparatus is extremely complicated. The leakage flux might have a harmful effect on driving of the linear motor and a magnetic sensor.

In order to restrict such a leakage flux to a small amount, it is conceivable to increase a thickness of the case, made of a ferromagnetic material, of the constant force generator. However, if the thickness of the case is increased, a size of the constant force generator becomes larger.

US 2018/0219452 A1 (which will also be called "Patent Document 2") discloses a "balanced mechanism using Halbach cylinders". The balanced mechanism disclosed in Patent Document 2 comprises a first Halbach cylinder having an inner cavity, a second Halbach cylinder, and an output. The second Halbach cylinder is centrically received in the inner cavity of the first Halbach cylinder to concurrently form a rotational joint having a rotational axis. The first Halbach cylinder is magnetized to produce a first magnetic flux concentrated circumferentially inside the inner cavity. One of the Halbach cylinders is a rotor and the other of the Halbach cylinders is a stator. The second Halbach cylinder is magnetized to produce a second magnetic flux concentrated circumferentially outwardly. The output is connected to the rotor to rotate therewith relative to the stator. The output applies a gravity load on the rotor. The gravity load is offset from the rotational axis. The magnetic flux of the first Halbach cylinder and the second Halbach cylinder cooperatively produce a torque against the gravity load caused by the output.

The balanced mechanism disclosed in the above-mentioned Patent Document 2 introduces problems which will presently be described.

The balanced mechanism disclosed in Patent Document 2 produces the torque needed to compensate the gravity load. That is, the stator and the rotor cooperatively produce the torque against any gravity load applied eccentrically on the rotor. The torque has a circumferential direction around the rotational axis. As a result, it is necessary for the balanced mechanism disclosed in Patent Document 2 to have the rotational axis which extends in a horizontal direction although the gravity load always acts in a vertical direction. If the rotational axis of the balanced mechanism extends in a direction different from the horizontal direction, for example, in the vertical direction, the balanced mechanism disclosed in Patent Document 2 cannot compensate the gravity load. The balanced mechanism disclosed in Patent Document 2 is therefore called a horizontal balanced mechanism throughout the instant specification because the rotational axis extends in the horizontal direction.

### SUMMARY OF THE INVENTION:

It is therefore an exemplary object of the present invention to provide a small-sized constant force generator which is capable of restricting a leakage flux to a small amount and an apparatus including it.

Other objects of this invention will become clear as the description proceeds.

In the following description, terms "upward", "upper end", "upper portion", and "upper surface" denote those in a vertical direction (up-and-down direction) in an apparatus (linear motor) to which a constant force generator according to the present invention is mounted, and terms "downward", "lower end", "lower portion", and "lower surface" denote those in the vertical direction (up-and-down direction) in the apparatus (linear motor) to which the constant force generator according to the present invention is mounted.

According to an exemplary aspect of the present invention, there is provided a constant force generator comprising: a case extending in an axial direction, the case being made of a tube-shaped ferromagnetic material; a tube-shaped stator extending in the axial direction, the tube-shaped stator being disposed in the case; and a rod-shaped shaft extending in the axial direction, the rod-shaped shaft being disposed in the tube-shaped stator via a gap, the rod-shaped shaft being movable in the axial direction relative to the tube-shaped stator, wherein the tube-shaped stator comprises: N main permanent magnets disposed adjacently at regular angular intervals of (360/N) degrees, each main permanent magnet being magnetized in a radial direction, where N represents an integer which is not less than two; and an even number of secondary permanent magnets disposed so as to sandwich each of the N main permanent magnets on both sides in a circumferential direction, each secondary permanent magnet being magnetized in the circumferential direction, the even number of secondary permanent magnets being configured to sandwich the both sides of each main permanent magnet so that magnetic poles of the secondary permanent magnets, facing the both sides of the sandwiched main permanent magnet, have a polarity the same as an inside magnetic pole of the sandwiched main permanent magnet, wherein the rod-shaped shaft at least includes a shaft portion made of a magnetic material.

In the above-mentioned constant force generator, the tube-shaped stator may be fixed to an inner wall surface of the case. It is preferable that N is an even number. In this event, it is desirable that the N main permanent magnets are disposed adjacently so that the N main permanent magnets are magnetized in the radial direction so as to have opposite polarities to each other.

In the above-mentioned constant force generator, N may be two. In this event, the tube-shaped stator may comprise two main permanent magnets and four secondary permanent magnets, and the shaft portion may include one permanent magnet magnetized to have magnetic poles faced to and opposite in polarity from the inside magnetic poles in the two main permanent magnets.

In the above-mentioned constant force generator, the rod-shaped shaft may comprise: a magnetic shaft as the shaft portion; and a nonmagnetic shaft continuous from the magnetic shaft, the nonmagnetic shaft extending in the axial direction.

In the above-mentioned constant force generator, N may be four. In this event, the tube-shaped stator may comprise four main permanent magnets and four secondary permanent magnets, the shaft portion may comprise: a rod-shaped ferromagnetic body; and four permanent magnets disposed so as to face an outer side of the rod-shaped ferromagnetic body, the four permanent magnets being magnetized to have magnetic poles opposite in polarity from the inside magnetic poles in the four main permanent magnets. The rod-shaped ferromagnetic body of such a configuration may have a square cross section and may have four side faces. In this event, it is preferable that the four permanent magnets are disposed so as to face the four side faces of the rod-shaped ferromagnetic body, the four permanent magnets being magnetized to have the magnetic poles opposite in polarity from the inside magnetic poles in the four main permanent magnets.

In the above-mentioned constant force generator, N may be eight. In this event, the tube-shaped stator may comprise eight main permanent magnets and eight secondary permanent magnets, the shaft portion may comprise: a rod-shaped ferromagnetic body; and eight permanent magnets disposed so as to face an outer side of the rod-shaped ferromagnetic body, the eight permanent magnets being magnetized to have magnetic poles opposite in polarity from the inside magnetic poles in the eight main permanent magnets. The rod-shaped ferromagnetic body of such a configuration may have an octagonal cross section and may have eight side faces. In this event, it is preferable that the eight permanent magnets are disposed so as to face the eight side faces of the rod-shaped ferromagnetic body, the eight permanent magnets being magnetized to have the magnetic poles opposite in polarity from the inside magnetic poles in the eight main permanent magnets.

In the above-mentioned constant force generator, it is preferable that the case has a hollow cylindrical shape, the tube-shaped stator has a hollow cylindrical shape, and the rod-shaped shaft has a solid cylindrical shape.

According to another exemplary aspect of the present invention, there is provided an apparatus comprising: a driven body extending in a longitudinal direction; a linear motor configured to drive the driven body in the longitudinal direction; and the above-mentioned constant force generator, wherein the constant force generator is mounted to the driven body, the longitudinal direction being the axial direction.

According to still another exemplary aspect of the present invention, there is provided an apparatus comprising: a driven body extending in a vertical direction, the driven body having first and second side faces opposite to each other; a linear motor mounted to the first side face of the driven body, the linear motor being configured to drive the driven body in the vertical direction; and the above-mentioned constant force generator, wherein the constant force generator is mounted to the second side face of the driven body, the vertical direction being the axial direction.

### BRIEF DESCRIPTION OF THE DRAWINGS:

The above features and advantages of the present invention will be more apparent from the following certain preferred embodiments taken in conjunction with the accompanying drawings, in which:
Fig. 1 is an external perspective view of an apparatus to which a constant force generator according to the present invention is mounted, as seen from obliquely forward and upper right;
Fig. 2 is a front view of the apparatus illustrated in in Fig. 1;
Fig. 3 is an external perspective view of a constant force generator according to a first example embodiment of the present invention;
Fig. 4 is a front view of the constant force generator illustrated in Fig. 3;
Fig. 5 is a plan view of the constant force generator illustrated in Fig. 3;
Fig. 6 is a transverse cross-sectional view taken on line VI-VI in Fig. 4;
Fig. 7 is a longitudinal cross-sectional view taken on line VII-VII in Fig. 5;
Fig. 8 is an exploded perspective view of the constant force generator illustrated in Fig. 3;
Fig. 9 is an external perspective view of a constant force generator according to a second example embodiment of the present invention;
Fig. 10 is a front view of the constant force generator illustrated in Fig. 9;
Fig. 11 is a plan view of the constant force generator illustrated in Fig. 9;
Fig. 12 is a transverse cross-sectional view taken on line XII-XII in Fig. 10;
Fig. 13 is a longitudinal cross-sectional view taken on line XIII-XIII in Fig. 11;
Fig. 14 is a transverse cross-sectional view of a constant force generator according to a third example embodiment of the present invention; and
Fig. 15 is a transverse cross-sectional view of a constant force generator according to a fourth example embodiment of the present invention.

### DETAILED DESCRIPTION OF THE EMBODIMENTS:

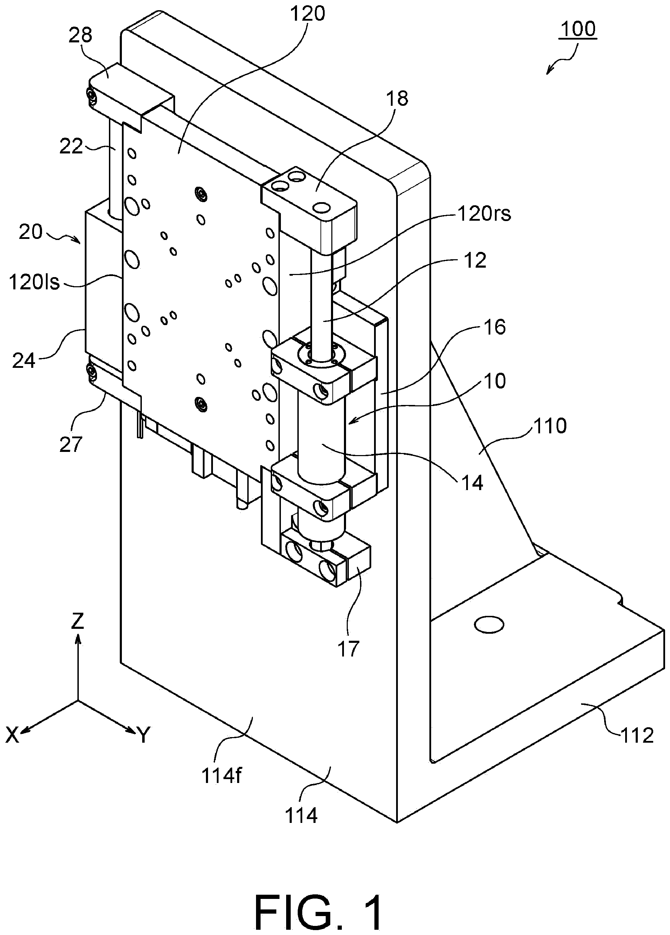

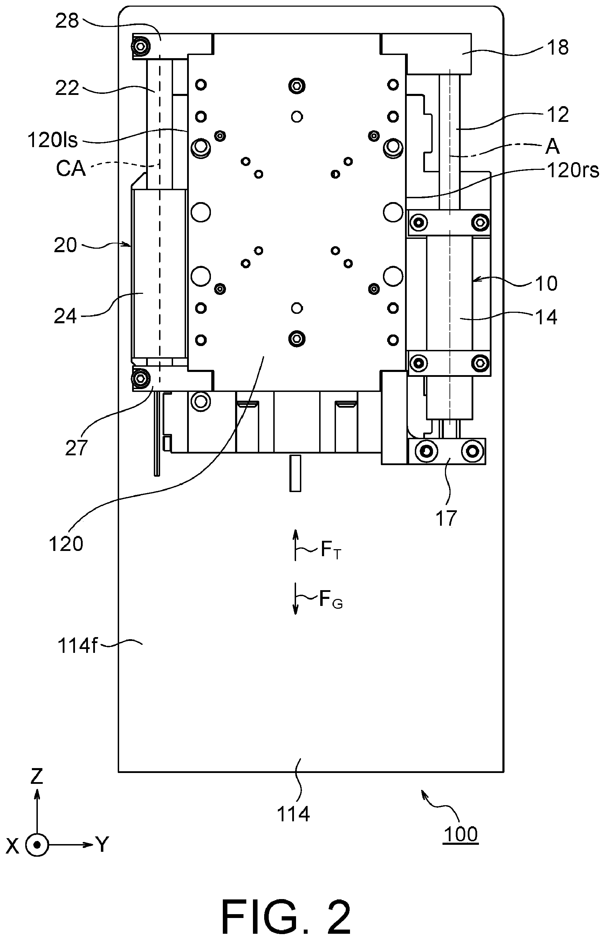

Referring to Figs. 1 and 2, an apparatus to which a constant force generator according to the present invention is mounted will be described in order to facilitate an understanding of the present invention. Fig. 1 is an external perspective view of the apparatus depicted at 100, as seen from obliquely forward and upper right. Fig. 2 is a front view of the apparatus 100.

Herein, as shown in Figs. 1 and 2, a Cartesian coordinate system (X, Y, Z) is used. In a state illustrated in Figs. 1 and 2, in the Cartesian coordinate system (X, Y, Z), an X-axis direction denotes a front-to-rear direction (depth direction), a Y-axis direction denotes a left-to-right direction (width direction), and a Z-axis direction denotes an up-and-down direction (height direction; vertical direction).

The apparatus 100 includes a stage 110. The stage 110 includes a base portion 112 and a mounting plate 114. The base portion 112 extends in a horizontal direction (in parallel with an X-Y plane). The mounting plate 114 extends from a front end of the base portion 112 in the vertical direction (in parallel with a Y-Z plane). The mounting plate 114 has a front surface 114f which extends in the vertical direction in parallel with the Y-Z plane. On the front surface 114f of the mounting plate 114, the constant force generator depicted at 10 according to the present invention, which will later be described, and a linear motor 20 are mounted.

The apparatus 100 includes a driven body 120 which is faced to the front surface 114f of the mounting plate 114 via a gap. Specifically, the driven body 120 has a rear surface (not shown) which is faced to the front surface 114f of the mounting plate 114 and apart from the front surface 114fof the mounting plate 114 by a predetermined distance. The driven body 120 has substantially a plate shape which extends in the vertical direction in parallel with the Y-Z plane. The driven body 120 has a right side face 120rs and a left side face 120ls which face each other in the left-to-right direction Y. Each of the right side face 120rs and the left side face 120ls extends in the up-and-down direction Z (vertical direction). Herein, the left side face 120ls is also referred to as a first side face while the right side face 120rs is also referred to as a second side face.

The above-mentioned linear motor 20 is mounted to the left side face 120ls of the driven body 120. On the other hand, the constant force generator 10 is mounted to the right side face 120rs of the driven body 120. Each of the linear motor 20 and the constant force generator 10 extends in the up-and-down direction (vertical direction) Z.

As mentioned above, the linear motor 20 includes a motor shaft 22 and a field coil (not shown). The motor shaft 22 has a central axis CA which extends in the vertical direction Z. The field coil is disposed around the motor shaft 22. The motor shaft 22 includes a plurality of permanent magnets each of which is magnetized in a direction of the central axis CA. The permanent magnets are fixed in a state where the permanent magnets are connected in series with the same magnetic poles faced to each other. The field coil includes a plurality of tube-shaped coils which are connected in series so as to concentrically enclose the motor shaft 22 via a gap. Accordingly, the illustrated linear motor 20 comprises a fixed coil (moving magnet) linear motor which is configured so that the motor shaft 22 serves as a movable portion and the field coil serves as a fixed portion.

The linear motor 20 includes a hollow cylindrical case 24 which covers the above-mentioned field coil. That is, the field coil is mounted on an inner wall surface of the case 24. The case 24 is fixed to the front surface 114f of the mounting plate 114 via a fixing member which is not shown in the figure.

The motor shaft 22 has a lower end portion which is mounted and fixed to a lower end portion of the left side face 120ls of the driven body 120 with a lower coupling member 27. On the other hand, the motor shaft 20 has an upper end portion which is mounted and fixed to an upper end portion of the left side face 120ls of the driven body 120 with an upper coupling member 28. Therefore, it is possible to move the driven body 120 up and down following up-and-down movement of the motor shaft 22 along the central axis CA.

The constant force generator 10 has an axial direction A in parallel with the up-and-down direction (vertical direction) Z. The constant force generator 10 includes a rod-shaped shaft 12 extending in the axial direction A, a tube-shaped stator (which will later be described) extending in the axial direction A, and a case 14 extending in the axial direction A. The case 14 is made of a tube-shaped ferromagnetic material. The tube-shaped stator is disposed in the case 14. In the example being illustrated, the tube-shaped stator is fixed to an inner wall surface of the case 14. The rod-shaped shaft 12 is disposed in the tube-shaped stator via a gap and is movable in the axial direction A relative to the tube-shaped stator.

The case 14 is fastened to the front surface 114f of the mounting plate 114 by a fastening member 16.

The rod-shaped shaft 12 has a lower end portion which is mounted and fixed to a lower end portion of the right side face 120rs of the driven body 120 with a lower coupling member 17. On the other hand, the rod-shaped shaft 12 has an upper end portion which is mounted and fixed to an upper end portion of the right side face 120rs of the driven body 120 with an upper coupling member 18.

As described above, the constant force generator 10 having such a configuration is for preventing falling of the driven body 120 including the motor shaft 22. Specifically, it is assumed that a power source for flowing an electric current through the field coil of the linear motor 20 is shut down suddenly. In this event, a gravity load F_{G} acts on the driven body 120, including the motor shaft 22 and the rod-shaped shaft 12, downward due to its own weight. The constant force generator 10 serves as a thrust force assist mechanism for generating a thrust force F_{T} against this gravity load F_{G}. As described above, the constant force generator 10 can keep a constant thrust force F_{T} at any position in a stroke of the linear motor 20. In the following description, the driven body 120 including the linear motor 22 and the rod-shaped shaft 12 is simply referred to as the driven body 120.

As described above, the constant force generator 10 not only prevents falling of the driven body 120 but also is operable as the thrust force assist mechanism for assisting the constant thrust force F_{T} against the gravity load F_{G} during driving of the linear motor 20.

In this way, the constant force generator 10 produces the constant thrust force F_{T} needed to compensate the gravity load F_{G}. That is, the constant force generator 10 produces the constant thrust force F_{T} against any gravity load applied to the driven body 120. The constant thrust force F_{T} acts in the vertical direction in parallel with the axial direction A while the gravity load F_{G} always acts in the vertical direction Z also. The constant force generator 10 is therefore called a vertical constant force generator because the axial direction A extends in the vertical direction Z. In construction and operation principle, the constant force generator 10 differs widely from the balanced mechanism disclosed in the above-mentioned Patent Document 2. This is because the rod-shaped shaft 12 moves up and down in the axial direction A in the constant force generator 10 while the rotor rotates around the rotational axis in the balanced mechanism disclosed in Patent Document 2.

Now, a method of using the constant force generator 10 acting as the thrust force assist mechanism will be described in detail. First of all, it is supposed that the constant force generator 10 is independently arranged and is not mounted to the apparatus 100 and that the constant force generator 10 is disposed so that the axial direction A coincides with the up-and-down direction (vertical direction) Z. In such a situation, the constant force generator 10 stops at a position where the tube-shaped stator and the rod-shaped shaft 12 are magnetically stabilized. Such a position will later be abbreviated to a "stable position" simply. Herein, the stable position is identical with a point (position) where a midpoint of the rod-shaped shaft 12 and a midpoint of the tube-shaped stator coincide with each other. It is assumed that, at the stable position, the constant force generator 10 is applied with a force for pushing the rod-shaped shaft 12 in the up-and-down direction (vertical direction) Z along the axial direction A. In this event, the constant force generator 10 generates the thrust force for returning to the stable positon. Specifically, it is assumed that the constant force generator 10 is applied with a force for pushing the rod-shaped shaft 12 in a downward direction. In this event, the constant force generator 10 generates the thrust force F_{T} in an upward direction so as to return to the above-mentioned stable position.

It is assumed that the constant force generator 10 is mounted to the apparatus 100 as shown in Figs. 1 and 2 with the rod-shaped shaft 12 pushed in the downward direction as described above. In this event, the constant force generator 10 generates the thrust force F_{T} for pushing the driven body 120 in the upward direction. Accordingly, in a situation where the electric current does not flow through the field coil of the linear motor 20, the constant force generator 10 stops at a balanced position at which the gravity load F_{G} in the downward direction acting on the driven body 120 and the above-mentioned thrust force F_{T} are balanced to each other. It is clear that the balanced position is a position where the rod-shaped shaft 12 of the constant force generator 10 shifts in the downward direction from the above-mentioned stable position.

It is assumed that, in the above-mentioned balanced position, the electric current flows through the field coil of the linear motor 20 to drive the motor shaft 22 of the linear motor 20 in an upward direction along the central axis CA and, as a result, to push the driven body 120 in the upward direction. In this event, if the rod-shaped shaft 12 of the constant force generator 10 moves in the upward direction from the above-mentioned stable position, the constant force generator 10 may generate a thrust force in a downward direction. Therefore, an upper limit positon in a stroke range of the linear motor 20 is defined (limited) to the above-mentioned stable position.

Whether the constant force generator 10 is to be pushed in the downward direction or in the upward direction depends on a method of mounting the constant force generator 10 to the apparatus 100. Specifically, in the example shown in Figs. 1 and 2, the constant force generator 10 serves as a moving shaft constant force generator in which the tube-shaped stator (case 14) is fixed to the mounting plate 114 and the rod-shaped shaft 12 is moved. In case of such a moving shaft constant force generator, the moving shaft constant force generator is mounted to the apparatus 100 in a state where the rod-shaped shaft 12 is pushed down in the manner mentioned before.

On the other hand, different from (contrary to) the moving shaft constant force generator as shown in Figs. 1 and 2, a fixed shaft constant force generator, in which the rod-shaped shaft 12 is fixed to the mounting plate 14 and the tube-shaped stator (case 14) is moved, may be used as the constant force generator. In such a fixed shaft constant force generator, the fixed shaft constant force generator may be mounted to the apparatus 100 in a state where the rod-shaped shaft 12 is pushed up. In this case also, the fixed shaft constant force generator may generate a thrust force F_{T} for pushing the driven body 120 in the upward direction. Accordingly, in a situation where the electric current does not flow through the field coil of the linear motor 20, the fixed shaft constant force generator stops at another balanced position at which the gravity load F_{G} in the downward direction acting on the driven body 20 and the above-mentioned thrust force F_{T} are balanced to each other. It is clear that the above-mentioned another balanced position is a position where the rod-shaped shaft 12 of the fixed shaft constant force generator shifts in the upward direction from the above-mentioned stable position.

In the apparatus 100 shown in Figs. 1 and 2, a fixed coil (moving magnet) linear motor which is configured so that the motor shaft 20 serves as the movable portion and the field coil serves as the fixed portion is used as the linear motor 20. However, it is a matter of course that a fixed magnet (moving coil) linear motor which is configured so that the motor shaft 22 serves as the fixed portion and the field coil serves as the movable portion may be used as the linear motor.

The above description is summarized as follows. For instance, in a case where the gravity load F_{G} of 1N (newton) acts on the driven body 120 of the apparatus 100 as shown in Figs. 1 and 2, it is assumed that the driven body 120 is assisted with the thrust force F_{T} equal to a force of 1N by means of the constant force generator 10 so as to counteract the gravity load F_{G}. In this event, it is possible to stop the constant force generator 10 (driven body 120) at any position when the electric current does not flow through the field coil of the linear motor 20. However, as described above, the upper limit position in the stroke range of the linear motor 20 is limited to the above-mentioned stable position.

In comparison with the above, it is assumed that the driven body 120 is assisted with the thrust force F_{T} larger than the force of 1N by means of the constant force generator 10. In this event, the constant force generator 10 (driven body 120) stops at the above-mentioned stable positon or at an upper end point which is set at any position up to the above-mentioned stable positon.

On the other hand, it is assumed that the driven body 120 is assisted with the thrust force F_{T} less than the force of 1N by means of the constant force generator 10. In this event, the constant force generator 10 (driven body 120) stops at a lower end point.

The upward thrust force F_{T} generated by the constant force generator 10 may apparently be an excess load when the linear motor 20 is driven by flowing the electric current through the field coil to move the driven body 120 downward. However, when the driven body 120 is moved downward, the gravity load F_{G} continually (originally) acts on the driven body 120 due to its own weight. Accordingly, the linear motor 20 may be driven at a thrust force which is obtained by subtracting a difference (F_{G} - F_{T}). This circumstance is same also in a case of moving the driven body 120 upward. Consequently, by assistance of the upward thrust force F_{T} generated by the constant force generator 10, the linear motor 20 may be driven with a smaller thrust force than that in a case without the constant force generator 10. Thus, it is understood that the constant force generator 10 is for assisting the thrust force of the linear motor 20 that is required for driving the driven body 120 upward.

As is apparent from the above description, it is possible to miniaturize the linear motor 20 by using the constant force generator 10. This is because, in order to increase the thrust force of the linear motor without using the constant force generator 10, it is necessary to increase the volume of permanent magnets or to increase the number of turns of coils and this results in an increase in size of the linear motor. In general, as a permanent magnet constituting the linear motor, a neodymium magnet having a strong magnetic force is used. However, the neodymium magnet is expensive. Accordingly, by using the constant force generator 10, it is possible to use the linear motor 20 with a low thrust force which includes, as a permanent magnet, a cheap permanent magnet except for the neodymium magnet, and to achieve a low cost.

In the apparatus 100 shown in Figs. 1 and 2, the driven body 120 extends in the vertical direction Z and has the first side face (left side face 120ls) and the second side face (right side face 120rs) which are opposite to each other. The linear motor 20 is mounted to the first side face (left side face 120ls) of the driven body 120 to drive the driven body 120 in the vertical direction Z. The constant force generator 10 is mounted to the second side face (right side face 120rs) of the driven body 120 and has the axial direction A coincident with the vertical direction Z.

However, an apparatus to which the present invention is applied is not limited to the apparatus shown in Figs. 1 and 2. In general, the apparatus to which the present invention is applied may comprise the driven body 120 extending in a longitudinal direction, the linear motor 20 for driving the driven body 120 in the longitudinal direction, and the constant force generator 10 which is mounted to the driven body 120 and has the axial direction A coincident with the longitudinal direction. Herein, the longitudinal direction is not limited to the vertical direction (up-and-down direction) Z and may be any direction.

### [First Example Embodiment]

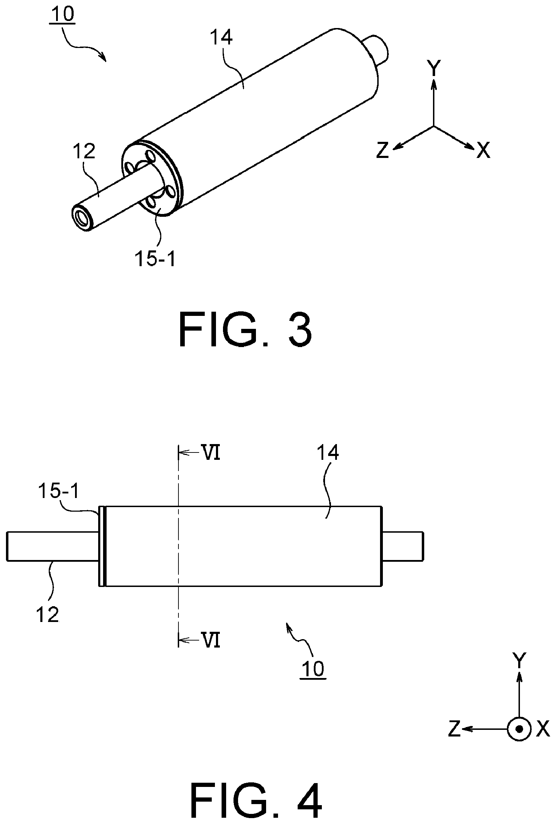

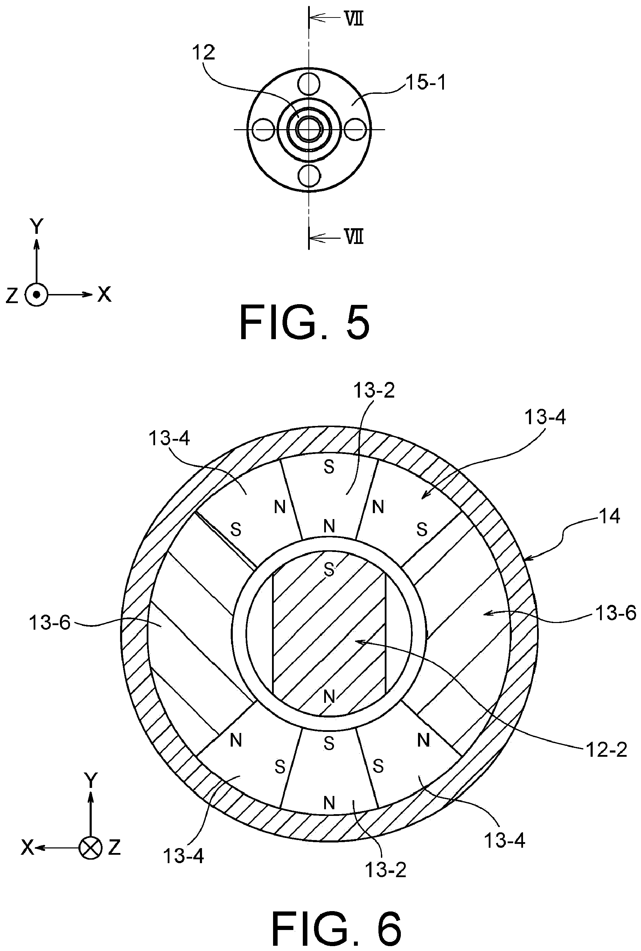

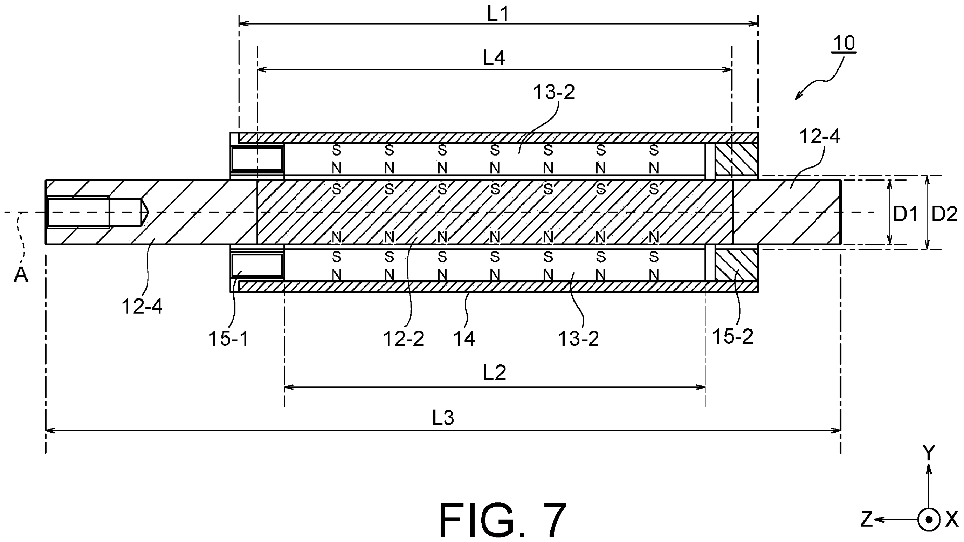

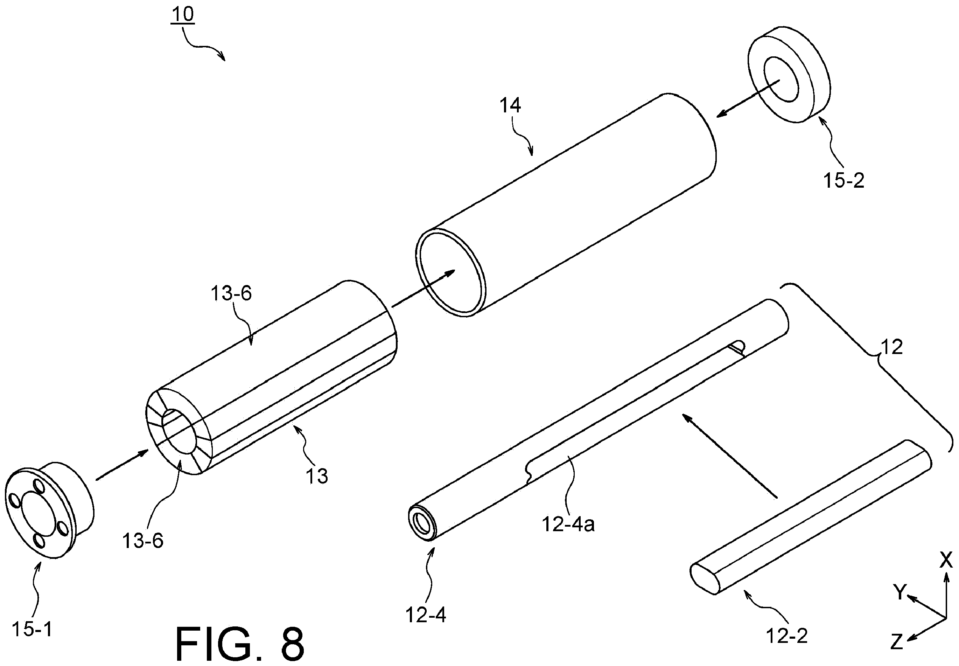

Referring to Figs. 3 through 8, description will proceed to a constant force generator 10 according to a first example embodiment of this invention. Fig. 3 is an external perspective view of the constant force generator 10. Fig. 4 is a front view of the constant force generator 10. Fig. 5 is a plan view of the constant force generator 10. Fig. 6 is a transverse cross-sectional view taken on line VI-VI in Fig. 4. Fig. 7 is a longitudinal cross-sectional view taken on line VII-VII in Fig. 5. Fig. 8 is an exploded perspective view of the constant force generator 10. In Figs. 3 through 8 also, the above-mentioned Cartesian coordinate system (X, Y, Z) is used.

The illustrated constant force generator 10 is a constant force generator in a case of two poles. The illustrated constant force generator 10 includes the case 14 having a hollow cylindrical shape, the tube-shaped stator depicted at 13 having a hollow cylindrical shape, and the rod-shaped shaft 12 having a solid cylindrical shape. Throughout the instant specification, the "two poles" refers to the number of magnetic poles faced to the rod-shaped shaft 12. More specifically, the "two poles" means a case where the number of main permanent magnets (which will later be described) constituting the tube-shaped stator 13 is equal to two.

The two poles may also be referred to as a one pole pair. The one pole pair produces a magnetic flux for a dipolar configuration.

As shown in Fig. 6, the tube-shaped stator 13 includes two main permanent magnets 13-2 and four secondary permanent magnets 13-4. The secondary permanent magnets 13-4 may also be called auxiliary permanent magnets. Specifically, the two main permanent magnets 13-2 are disposed at regular angular intervals of 180 degrees and magnetized in a radial direction so as to have opposite polarities to each other. Each main permanent magnet 13-2 has a circular arc shape in plan view and has a constant width (thickness) in the radial direction. On the other hand, the four secondary permanent magnets 13-4 are disposed so as to sandwich each of the two main permanent magnets 13-2 from both sides in a circumferential direction, and are magnetized in the circumferential direction. Each secondary permanent magnet 13-4 also has a circular arc shape in plan view and has a constant width (thickness) in the radial direction. A pair in the four secondary permanent magnets 13-4 sandwiches both sides of the sandwiched main permanent magnet 13-2 so that magnetic poles of the secondary permanent magnets 13-4, facing the both sides of the sandwiched main permanent magnet 13-2, have a polarity the same as an inside magnetic pole of the sandwiched main permanent magnet 13-2. For instance, it is assumed that the inside magnet pole of the sandwiched main permanent magnet 13-2 is the north pole. In this event, the pair of the secondary permanent magnets 13-4 on the both sides thereof sandwiches the sandwiched main permanent magnet 13-2 so as to have the north pole as the same polarity. Thus, the tube-shaped stator 13 forms a permanent magnet region of Halbach configuration by one main permanent magnet 13-2 and a pair of secondary permanent magnets 13-4 which sandwiches the main permanent magnet. Accordingly, the tube-shaped stator 13 includes a pair of permanent magnet regions of Halbach configuration. The tube-shaped stator 13 includes a pair of spacers 13-6 made of nonmagnetic material in addition to the pair of permanent magnet regions of Halbach configuration. Each spacer 13-6 also has a circular arc shape in plan view and has a constant width (thickness) in the radial direction. The pair of spacers 13-6 and the pair of permanent magnet regions of Halbach configuration are adhered by an adhesive agent to constitute the tube-shaped stator 13 having the hollow cylindrical shape.

The tube-shaped stator 13 having the hollow cylindrical shape of such a configuration is inserted into the case 14 having the hollow cylindrical shape and made of a ferromagnetic material, as shown in Fig. 8, and is adhered to an inner wall surface of the case 14 with an adhesive agent. Consequently, as shown in Fig. 7, the tube-shaped stator 13 is fixed to the inner wall surface of the case 14. Thereafter, both end portions of the case 14 are covered with a pair of ring-shaped end caps 15-1 and 15-2. As apparent from Fig. 7, the case 14 has a length L1 in the axial direction A that is longer than a length L2 of the tube-shaped stator 13 in the axial direction A (L1 > L2).

The rod-shaped shaft 12 at least includes a shaft portion 12-2 made of a magnetic material. Specifically, the illustrated rod-shaped shaft 12 includes a shaft main body 12-4 and the shaft portion 12-2. The shaft main body 12-4 has an opening 12-4a into which the shaft portion 12-2 is inserted. The shaft portion 12-2 is inserted into the opening 12-4a and, in this state, adhered to the shaft main body 12-4 with an adhesive agent.

As shown in Fig. 6, the illustrated shaft portion 12-2 includes one permanent magnet which is magnetized to have magnetic poles opposite in polarity from the inside magnetic poles of the two main permanent magnets 13-2 of the above-mentioned tube-shaped stator 13. For instance, it is assumed that the inside magnetic pole of the main permanent magnet 13-2 is the north pole. In this event, a magnetic pole of the permanent magnet 12-2 faced thereto is the south pole. As apparent from Fig. 7, the shaft main body 12-4 has a length L3 in the axial direction A that is longer than the length L1 of the case 14 in the axial direction A (L3 > L1). On the other hand, the one permanent magnet 12-2 has a length L4 in the axial direction A that is shorter than the length L1 of the case 14 in the axial direction A and that is longer than the length L2 of the tube-shaped stator 13 in the axial direction A (L1 > L4 > L2). The rod-shaped shaft 12 has a diameter D1 that is smaller than an inside diameter D2 of the tube-shaped stator 13 (D1 < D2). Thus, the rod-shaped shaft 12 is disposed in the tube-shaped stator 13 via a gap. As apparent from Figs. 4 and 7, the rod-shaped shaft 12 has an upper portion projecting from the case 14 upward in the vertical direction (up-and-down direction Z) that is longer than a lower portion projecting from the case 14 downward in the vertical direction (up-and-down direction Z). This is because the upper portion of the rod-shaped shaft 12 is supposed to be pushed inside the case 14 when the constant force generator 10 is mounted to the apparatus 100 (see Figs. 1 and 2).

As described with reference to Figs. 1 and 2, when the constant force generator 10 is mounted to the apparatus 100, the constant force generator 10 is positioned with respect to the apparatus 100 with high accuracy so as to leave the above-mentioned gap, and then mounted to the apparatus 100. For instance, as disclosed in the above-mentioned Patent Document 1, the above-mentioned gap may be formed by inserting a cylindrical member having high slidablity between the tube-shaped stator 13 and the rod-shaped shaft 12.

According to the constant force generator 10, the rod-shaped shaft 12 is movable in the axial direction A (i.e., the vertical direction Z) relative to the tube-shaped stator 13, as mentioned above.

With the constant force generator 10 having such a configuration, it is possible to restrain magnetic flux generated from the permanent magnet regions of the tube-shaped stator 13 from leaking from the case 14 to the outside even if the case 14 has a small thickness. This is because the permanent magnet regions of the tube-shaped stator 13 have the Halbach configuration, as described above. Accordingly, it is possible to provide a small-sized constant force generator 10 which can restrict the leakage magnetic flux to a small amount.

### [Second Example Embodiment]

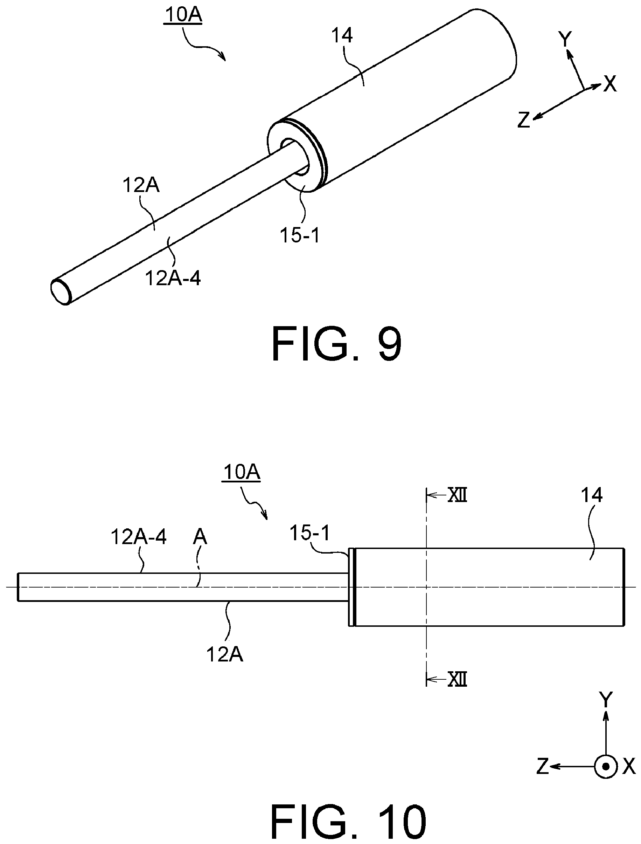

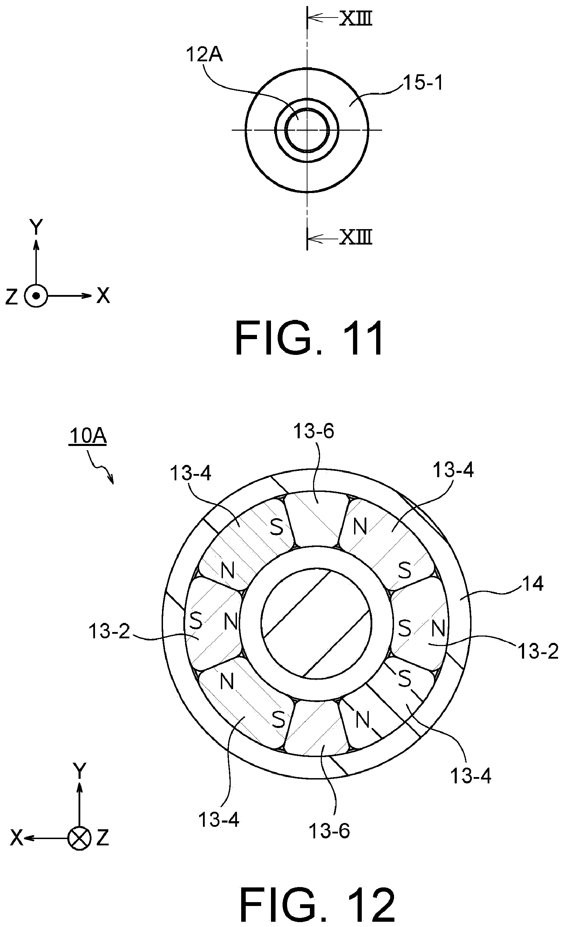

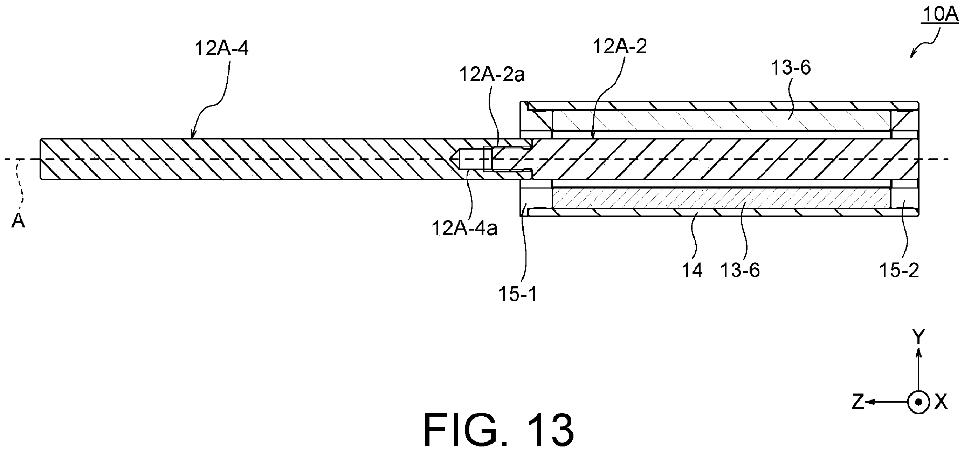

Referring to Figs. 9 through 13, description will proceed to a constant force generator 10A according to a second example embodiment of this invention. Fig. 9 is an external perspective view of the constant force generator 10A. Fig. 10 is a front view of the constant force generator 10A. Fig. 11 is a plan view of the constant force generator 10A. Fig. 12 is a transverse cross-sectional view taken on line XII-XII in Fig. 10. Fig. 13 is a longitudinal cross-sectional view taken on line XIII-XIII in Fig. 11. In Figs. 9 through 13 also, the above-mentioned Cartesian coordinate system (X, Y, Z) is used.

The illustrated constant force generator 10A also is a constant force generator in a case of two poles. The illustrated constant force generator 10A is substantially similar in structure and operation to the above-mentioned constant force generator 10 according to the first example embodiment except that the configuration of the rod-shaped shaft is modified from that illustrated in Figs. 3 through 8 as will later become clear. The rod-shaped shaft is therefore depicted by 12A. In the constant force generator 10A, components similar to those of the above-mentioned constant force generator 10 illustrated in Figs. 3 through 8 are denoted by the same reference symbols, and different points only will hereinafter be described for the purpose of simplification of the description.

As shown in Fig. 13, the rod-shaped shaft 12A includes a magnetic shaft 12A-2 as the shaft portion and a nonmagnetic shaft 12A-4. The nonmagnetic shaft 12A-4 is continuous from the magnetic shaft 12A-2 and extends in the axial direction A. Specifically, the magnetic shaft 12A-2 has an end portion (upper end portion) which is provided with a male screw 12A-2a. On the other hand, the nonmagnetic shaft 12A-4 has an end portion (lower end portion) which is faced to the end portion (upper end portion) of the magnetic shaft 12A-2 and on which a female screw 12A-4a is threaded. The rod-shaped shaft 12 is formed (configured) by screwing the male screw 12A-2a of the magnetic shaft 12A-2 into the female screw 12A-4a of the nonmagnetic shaft 12A-4. Although a screw member is used as fastening means in the second example embodiment, the fastening means is not limited to the screw member in the present invention. For instance, the magnetic shaft 12A-2 and the nonmagnetic shaft 12A-4 may be fastened by other fastening means such as adhesion using an adhesive agent or compression bonding. The magnetic shaft 12A-2 is, for example, made of iron or the like. On the other hand, the nonmagnetic shaft 12A-4 is made of a nonmagnetic material which is, for example, stainless steel (SUS303).

Hence, a main difference from the above-mentioned constant force generator 10 according to the first example embodiment is that the constant force generator 10A uses, as the shaft portion, the magnetic shaft 12A-2 in lieu of the one permanent magnet 12-2. Inasmuch as the magnetic shaft 12A-2 is used as the shaft portion, the thrust force F_{T} generated by the constant force generator 10A becomes weak as compared with that of the constant force generator 10 according to the first example embodiment. However, the constant force generator 10A also can keep the constant thrust force F_{T}.

According to the constant force generator 10A, the rod-shaped shaft 12A is movable in the axial direction A (i.e., the vertical direction Z) relative to the tube-shaped stator 13, as mentioned above.

According to the constant force generator 10A having such a configuration, it is possible to restrain magnetic flux generated from the permanent magnet regions of the tube-shaped stator 13 from leaking from the case 14 to the outside even if the case 14 has a small thickness. This is because the permanent magnet regions of the tube-shaped stator 13 have the Halbach configuration, as described above. Accordingly, it is possible to provide a small-sized constant force generator 10A which can restrict the leakage magnetic flux to a small amount.

Although the illustrated constant force generator 12A comprises a constant force generator including the tube-shaped stator 13 of two poles (i.e. including two main permanent magnets), the present invention may be applied to a constant force generator including a tube-shaped stator of four poles or eight poles, as in other example embodiments which will later be described. That is, the rod-shaped shaft 12A may be provided for such a tube-shaped stator of the four poles or eight poles. The "four poles" means a case where the number of main permanent magnets (which will later be described) constituting the tube-shaped stator is equal to four while the "eight poles" means a case where the number of main permanent magnets (which will later be described) constituting the tube-shaped stator is equal to eight.

The four poles may also be referred to as two pole pairs. The two pole pairs produce a magnetic flux for a quadripolar configuration. The eight poles may also be referred to as four pole pairs. The four pole pairs produce a magnetic flux for octupolar configuration.

### [Third Example Embodiment]

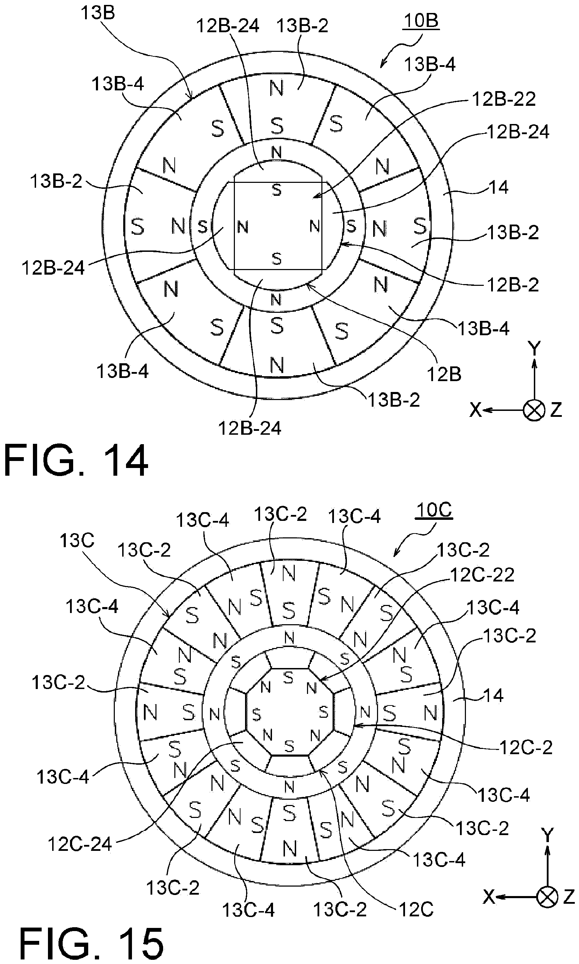

Referring to Fig. 14, description will proceed to a constant force generator 10B according to a third example embodiment of this invention. Fig. 14 is a transverse cross-sectional view of the constant force generator 10B. In Fig. 14 also, the above-mentioned Cartesian coordinate system (X, Y, Z) is used.

The illustrated constant force generator 10B is a constant force generator in a case of four poles. The illustrated constant force generator 10B is substantially similar in structure and operation to the above-mentioned constant force generator 10 according to the first example embodiment except that configurations of the rod-shaped shaft and the tube-shaped stator are modified from those illustrated in Figs. 3 through 8 as will later become clear. The rod-shaped shaft and the tube-shaped stator are therefore depicted at reference symbols 12B and 13B, respectively. In the constant force generator 10B, components similar to those of the above-mentioned constant force generator 10 illustrated in Figs. 3 through 8 are depicted by the same reference numerals, and different points only will hereinafter be described for the purpose of simplification of description.

The illustrated tube-shaped stator 13B includes four main permanent magnets 13B-2 and four secondary permanent magnets 13B-4. The four main permanent magnets 13B-2 are adjacently disposed at regular angular intervals of 90 degrees and magnetized in a radial direction so as to have opposite polarities to each other. Each main permanent magnet 13B-2 has a circular arc shape in plan view and has a constant width (thickness) in the radial direction. On the other hand, the four secondary permanent magnets 13B-4 are disposed so as to sandwich each of the four main permanent magnets 13B-2 from both sides in a circumferential direction and are magnetized in the circumferential direction. Each secondary permanent magnet 13B-4 also has a circular arc shape in plan view and has a constant width (thickness) in the radial direction. An adjacent pair in the four secondary permanent magnets 13B-4 sandwiches both sides of the sandwiched main permanent magnet 13B-2 so that magnetic poles of the secondary permanent magnets 13B-4, facing the both sides of the sandwiched main permanent magnet 13B-2, have a polarity the same as an inside magnetic pole of the sandwiched main permanent magnet 13B-2. However, different from the tube-shaped stator 13 according to the first example embodiment, the tube-shaped stator 13B has no spacer. Thus, the tube-shaped stator 13B also includes permanent magnet regions of Halbach configuration.

The illustrated rod-shaped shaft 12B is similar in structure to the rod-shaped shaft 12 according to the first example embodiment except that a configuration of the shaft portion is different from that illustrated in Figs. 3 through 8 as will later become clear. The shaft portion is therefore depicted at a reference symbol 12B-2.

The illustrated shaft portion 12B-2 includes a rod-shaped ferromagnetic body 12B-22 and four permanent magnets 12B-24. As shown in Fig. 14, the rod-shaped ferromagnetic body 12B-22 has a square cross section in plan view and has four side faces. The four permanent magnets 12B-24 are disposed on the four side faces of the rod-shaped ferromagnetic body 12B-22. Each permanent magnet 12B-24 has a semicylindrical shape in plan view. Specifically, the four permanent magnets 12B-24 are adhered and fixed to the four side faces of the rod-shaped ferromagnetic body 12B-22 with an adhesive agent. The four permanent magnets 12B-24 are disposed so as to face the inside magnetic poles of the four main permanent magnets 13B-2 of the tube-shaped stator 13B, respectively, and are magnetized so as to have magnetic poles of opposite polarities from the inside magnetic poles of the four main permanent magnets 13B-2 of the tube-shaped stator 13B.

Inasmuch as a combination of the rod-shaped ferromagnetic body 12B-22 and the four permanent magnets 12B-24 is used as the shaft portion 12B-2 as described above, it is possible to strengthen the thrust force F_{T} generated by the constant force generator 10B as compared with the constant force generator 10 according to the first example embodiment. In the constant force generator 10B having such a configuration also, it is possible to keep the constant thrust force F_{T} at any position in the stroke of the linear motor 20.

According to the constant force generator 10B, the rod-shaped shaft 12B is movable in the axial direction A (i.e., the vertical direction Z) relative to the tube-shaped stator 13B, as mentioned above.

According to the constant force generator 10B having such a configuration, it is possible to restrain magnetic flux generated from the permanent magnet regions of the tube-shaped stator 13B from leaking from the case 14 to the outside even if the case 14 has a small thickness. This is because the permanent magnet regions of the tube-shaped stator 13B have the Halbach configuration, as described above. Accordingly, it is possible to provide a small-sized constant force generator 10B which can restrict the leakage magnetic flux to a small amount.

The structure (configuration) of the shaft portion 12B-2 is not limited to that shown in Fig. 14. For instance, a solid cylindrical ferromagnetic body may be used as the rod-shaped ferromagnetic body. In this event, as each of the four permanent magnets, a permanent magnet having a tile shape in plan view may be pasted to an outer side face of the solid cylindrical ferromagnetic body.

### [Fourth Example Embodiment]

Referring to Fig. 15, description will proceed to a constant force generator 10C according to a fourth example embodiment of this invention. Fig. 15 is a transverse cross-sectional view of the constant force generator 10C. In Fig. 15 also, the above-mentioned Cartesian coordinate system (X, Y, Z) is used.

The illustrated constant force generator 10C is a constant force generator in a case of eight poles. The illustrated constant force generator 10C is substantially similar in structure and operation to the above-mentioned constant force generator 10 according to the first example embodiment except that configurations of the rod-shaped shaft and the tube-shaped stator are modified from those illustrated in Figs. 3 through 8 as will later become clear. The rod-shaped shaft and the tube-shaped stator are therefore depicted at reference symbols 12C and 13C, respectively. In the constant force generator 10C, components similar to those of the above-mentioned constant force generator 10 illustrated in Figs. 3 through 8 are depicted by the same reference numerals, and different points only will later be described for the purpose of simplification of description.

The illustrated tube-shaped stator 13C includes eight main permanent magnets 13C-2 and eight secondary permanent magnets 13C-4. The eight main permanent magnets 13C-2 are adjacently disposed at regular angular intervals of 45 degrees and magnetized in a radial direction so as to have opposite polarities to each other. Each main permanent magnet 13C-2 has a circular arc shape in plan view and has a constant width (thickness) in the radial direction. The eight secondary permanent magnets 13C-4 are disposed so as to sandwich each of the eight main permanent magnets 13C-2 from both sides in a circumferential direction and are magnetized in a circumferential direction. Each secondary permanent magnet 13C-4 also has a circular arc shape in plan view and has a constant width (thickness) in the radial direction. An adjacent pair in the eight secondary permanent magnets 13C-4 sandwiches both sides of the sandwiched main permanent magnet 13C-2 so that magnetic poles of the secondary permanent magnets 13C-4, facing the both sides of the sandwiched main permanent magnet 13C-2, have a polarity the same as an inside magnetic pole of the sandwiched main permanent magnet 13C-2. However, different from the tube-shaped stator 13 according to the first example embodiment, the tube-shaped stator 13C has no spacer. Thus, the tube-shaped stator 13C also includes permanent magnet regions of Halbach configuration.

The illustrated rod-shaped shaft 12C is similar in structure to the rod-shaped shaft 12 according to the first example embodiment except that a configuration of the shaft portion is different from that illustrated in Figs. 3 through 8 as will later become clear. The shaft portion is therefore depicted at a reference symbol 12C-2.

The illustrated shaft portion 12C-2 includes a rod-shaped ferromagnetic body 12C-22 and eight permanent magnets 12C-24. As shown in Fig. 15, the rod-shaped ferromagnetic body 12C-22 has an octagonal cross section in plan view and has eight side faces. The eight permanent magnets 12C-24 are disposed on the eight side faces of the rod-shaped ferromagnetic body 12C-22. Each permanent magnet 12C-24 has a substantially circular arc shape in plan view. Specifically, the eight permanent magnets 12C-24 are adhered and fixed to the eight side faces of the rod-shaped ferromagnetic body 12C-22 with an adhesive agent. The eight permanent magnets 12C-24 are disposed so as to face the inside magnetic poles of the eight main permanent magnets 13C-2 of the tube-shaped stator 13C, respectively, and are magnetized so as to have magnetic poles opposite in polarity from the inside magnetic poles of the eight main permanent magnets 13C-2 of the tube-shaped stator 13C.

Inasmuch as a combination of the rod-shaped ferromagnetic body 12C-22 and the eight permanent magnets 12C-24 is used as the shaft portion 12C-2 as described above, it is possible to strengthen the thrust force F_{T} generated by the constant force generator 10C as compared with the constant force generator 10 according to the first example embodiment. In the constant force generator 10C having such a configuration also, it is possible to keep the constant thrust force F_{T} at any position in the stroke of the linear motor 20.

According to the constant force generator 10C, the rod-shaped shaft 12C is movable in the axial direction A (i.e., the vertical direction Z) relative to the tube-shaped stator 13C, as mentioned above.

According to the constant force generator 10C having such a configuration, it is possible to restrain magnetic flux generated from the permanent magnet regions of the tube-shaped stator 13C from leaking from the case 14 to the outside even if the case 14 has a small thickness. This is because the permanent magnet regions of the tube-shaped stator 13C have the Halbach configuration, as described above. Accordingly, it is possible to provide a small-sized constant force generator 10C which can restrict the leakage magnetic flux to a small amount.

The structure (configuration) of the shaft portion 12C-2 is not limited to that shown in Fig. 15. For instance, a solid cylindrical ferromagnetic body may be used as the rod-shaped ferromagnetic body. In this event, as each of the eight permanent magnets, a permanent magnet having a tile shape in plan view may be pasted to an outer side face of the solid cylindrical ferromagnetic body.

While the invention has been particularly shown and described with reference to example embodiments thereof, the invention is not limited to these embodiments. It will be understood by those of ordinary skill in the art that various changes in form and details may be made therein without departing from the sprit and scope of the present invention as defined in the claims.

For example, in the above-mentioned constant force generators 10 to 10C according to the first through the fourth example embodiments, the cases of the two poles, the four poles, and the eight poles have been described by way of example. However, the present invention is generally applicable to a case of N poles, where N represents an integer which is not less than two. In this event, the tube-shaped stator includes N main permanent magnets and an even number of secondary permanent magnets. The N main permanent magnets are disposed adjacently at regular angular intervals of (360/N) degrees. Each main permanent magnet is magnetized in a radial direction. The even number of secondary permanent magnets are disposed so as to sandwich each of the N main permanent magnets on both sides in a circumferential direction. Each secondary permanent magnet is magnetized in the circumferential direction. The even number of secondary permanent magnets are configured to sandwich the both sides of each main permanent magnet so that magnetic poles of the secondary permanent magnets, facing the both sides of the sandwiched main permanent magnet, have a polarity the same as an inside magnetic pole of the sandwiched main permanent magnet. It is preferable that N is an even number. In the above-mentioned constant force generators 10 to 10C according to the first through the fourth example embodiments, each of the case and the tube-shaped stator has a hollow cylindrical shape while the rod-shaped shaft has a solid cylindrical shape. However, it is a matter of course that the shapes thereof are not limited thereto in this invention. For instance, each of the case and the tube-shaped stator may have any kind of tubular shape while the rod-shaped shaft may have any kind of rod shape.

### INDUSTRIAL APPLICABILITY:

The constant force generator according to this invention is not only used as the afore-mentioned thrust force auxiliary mechanism, but also may be used in other mechanisms requiring the constant thrust force. The constant force generator according to this invention can be used for only one purpose of either preventing falling or assisting the thrust force.

## Claims

1. A constant force generator (10; 10A; 10B; 10C) comprising:
a case (14) extending in an axial direction (A), the case (14) being made of a tube-shaped ferromagnetic material;
a tube-shaped stator (13; 13B; 13C) extending in the axial direction (A), the tube-shaped stator (13) being disposed in the case (14); and
a rod-shaped shaft (12; 12A; 12B; 12C) extending in the axial direction (A), the rod-shaped shaft (12; 12A; 12B; 12C) being disposed in the tube-shaped stator (13; 13B; 13C) via a gap, the rod-shaped shaft (12; 12A; 12B; 12C) being movable in the axial direction (A) relative to the tube-shaped stator (13; 13B; 13C),
**characterized in that** the tube-shaped stator (13; 13B; 13C) comprises:
N main permanent magnets (13-2; 13B-2; 13C-2) disposed adjacently at regular angular intervals of (360/N) degrees, each main permanent magnet (13-2; 13B-2; 13C-2) being magnetized in a radial direction, where N represents an integer which is not less than two; and
an even number of secondary permanent magnets (13-4; 13B-4; 13C-4) disposed so as to sandwich each of the N main permanent magnets (13-2; 13B-2; 13C-2) on both sides in a circumferential direction, each secondary permanent magnet (13-4; 13B-4; 13C-4) being magnetized in the circumferential direction, the even number of secondary permanent magnets (13-4; 13B-4; 13C-4) being configured to sandwich the both sides of each main permanent magnet (13-2; 13B-2; 13C-2) so that magnetic poles of the secondary permanent magnets, facing the both sides of the sandwiched main permanent magnet, have a polarity the same as an inside magnetic pole of the sandwiched main permanent magnet (13-2; 13B-2; 13C-2),
wherein the rod-shaped shaft (12; 12A; 12B; 12C) at least includes a shaft portion (12-2; 12B-2; 12C-2) made of a magnetic material.

2. The constant force generator as claimed in claim 1, wherein the tube-shaped stator (13; 13B; 13C) is fixed to an inner wall surface of the case (14).

3. The constant force generator as claimed in claim 1 or 2,
wherein N is an even number, and
wherein N main permanent magnets (13-2; 13B-2; 13C-2) are disposed adjacently so that the N main permanent magnets (13-2; 13B-2; 13C-2) are magnetized in the radial direction so as to have opposite polarities to each other.

4. The constant force generator as claimed in any one of claims 1 to 3,
wherein N is two,
wherein the tube-shaped stator (13) comprises two main permanent magnets (13-2) and four secondary permanent magnets (13-4),
wherein the shaft portion includes one permanent magnet (12-2) magnetized to have magnetic poles faced to and opposite in polarity from the inside magnetic poles in the two main permanent magnets (13-2).

5. The constant force generator as claimed in any one of claims 1 to 3,
wherein the rod-shaped shaft (12A) comprises:
a magnetic shaft (12A-2) as the shaft portion; and
a nonmagnetic shaft (12A-4) being continuous from the magnetic shaft (12A-2), the nonmagnetic shaft (12A-4) extending in the axial direction (A).

6. The constant force generator as claimed in any one of claims 1 to 3,
wherein N is four,
wherein the tube-shaped stator (13B) comprises four main permanent magnets (13B-2) and four secondary permanent magnets (13B-4),
wherein the shaft portion (12B-2) comprises:
a rod-shaped ferromagnetic body (12B-22); and
four permanent magnets (12B-24) disposed so as to face an outer side of the rod-shaped ferromagnetic body (12B-22), the four permanent magnets (12B-24) being magnetized to have magnetic poles opposite in polarity from the inside magnetic poles in the four main permanent magnets (13B-2).

7. The constant force generator as claimed in claim 6,
wherein the rod-shaped ferromagnetic body (12B-22) has a square cross section and has four side faces,
wherein the four permanent magnets (12B-24) are disposed so as to face the four side faces of the rod-shaped ferromagnetic body (12B-22), the four permanent magnets (12B-24) being magnetized to have the magnetic poles opposite in polarity from the inside magnetic poles in the four main permanent magnets (13B-2).

8. The constant force generator as any one of claimed in claims 1 to 3,
wherein N is eight,
wherein the tube-shaped stator (13C) comprises eight main permanent magnets (13C-2) and eight secondary permanent magnets (13C-4),
wherein the shaft portion (12C-2) comprises:
a rod-shaped ferromagnetic body (12C-22); and
eight permanent magnets (12C-24) disposed so as to face an outer side of the rod-shaped ferromagnetic body (12C-22), the eight permanent magnets (12C-24) being magnetized to have magnetic poles opposite in polarity from the inside magnetic poles in the eight main permanent magnets (13C-4).

9. The constant force generator as claimed in claim 8,
wherein the rod-shaped ferromagnetic body (12C-22) has an octagonal cross section and has eight side faces,
wherein the eight permanent magnets (12C-24) are disposed so as to face the eight side faces of the rod-shaped ferromagnetic body (12C-22), the eight permanent magnets (12C-24) being magnetized to have the magnetic poles opposite in polarity from the inside magnetic poles in the eight main permanent magnets (13C-2).

10. The constant force generator as any one of claimed in claims 1 to 9,
wherein the case (14) has a hollow cylindrical shape,
wherein the tube-shaped stator (13; 13B; 13C) has a hollow cylindrical shape, and
wherein the rod-shaped shaft (12; 12A; 12B; 12C) has a solid cylindrical shape.

11. An apparatus (100), comprising:
a driven body (120) extending in a longitudinal direction (Z);
a linear motor (20) configured to drive the driven body (120) in the longitudinal direction (Z); and
the constant force generator (10; 10A; 10B; 10C) according to any one of claims 1 to 10,
wherein the constant force generator (10; 10A; 10B; 10C) is mounted to the driven body (120), the axial direction (A) being the longitudinal direction (Z).

12. An apparatus (100), comprising:
a driven body (120) extending in a vertical direction (Z), the driven body (120) having first and second side faces (120ls, 120rs) opposite to each other;
a linear motor (20) mounted to the first side face (120ls) of the driven body (120), the linear motor (20) being configured to drive the driven body (120) in the vertical direction (Z); and
the constant force generator (10; 10A; 10B; 10C) according to any one of claims 1 to 10,
wherein the constant force generator (10; 10A; 10B; 10C) is mounted to the second side face (120rs) of the driven body (120), the vertical direction (Z) being the axial direction (A).
